# EUROPEAN PATENT SPECIFICATION

(11) **EP 2 945 265 B1**
(45) Date of publication and mention of the grant of the patent: **25.10.2017**
(21) Application number: 13871171.8
(22) Date of filing: 12.12.2013
(51) Int. Cl.: H02K 11/00, G01D 5/20, G01D 5/244, H02K 11/225, H02K 5/173

(54) **MOTOR EQUIPPED WITH RESOLVER AND RE-GREASABLE MOTOR WITH RESOLVER**
MOTOR MIT EINEM RESOLVER UND SCHMIERBARER MOTOR MIT EINEM RESOLVER
MOTEUR ÉQUIPÉ D'UN RÉSOLVEUR ET MOTEUR APTE À ÊTRE REGRAISSÉ AYANT UN RÉSOLVEUR

(30) Priority: 10.01.2013 JP 2013002218
(43) Date of publication of application: 18.11.2015
(73) Proprietor: Hitachi Industrial Equipment Systems Co., Ltd., Chiyoda-ku Tokyo 101-0022 (JP)
(72) Inventor: MIYOSHI, Tsutomu, Tokyo 101-0022 (JP); YAJIMA, Kenji, Tokyo 101-0022 (JP)
(74) Representative: Moore, Graeme Patrick
(86) International application number: PCT/JP2013/083372
(87) International publication number: WO 2014/109171

(56) References cited:
- EP-A1- 2 538 527
- WO-A1-2008/035755
- JP-A- 2005 318 745
- JP-A- 2007 221 935
- JP-A- 2008 160 909
- JP-A- 2012 105 400
- US-A1- 2004 090 132
- US-A1- 2010 097 053

## Description

### [Technical Field]

The present invention relates to a motor equipped with a resolver and a grease exchange type motor with a resolver, and specifically, relates to those having an improved structure so that the resolver is not influenced by a magnetic flux leaking from a motor body.

### [Background Art]

For example, as shown in Patent Literature 1, a resolver exists as a detecting device for detecting a rotational position of a rotary machine, such as a motor or a generator. Currently, a resolver having excellent environmental resistance is used as the rotation position detecting device of a motor for hybrid automobiles to be used under unfavorable conditions of high heat, low heat and vibration. A resolver is installed near a bearing to obtain rotational accuracy, and a shield bearing having grease enclosed therein or oil-lubricated bearing are often used as the bearing.

On the other hand, a bearing having grease enclosed therein is often used as the bearing of the motor, but the grease has a life which is determined by load, temperature and rotation speed. Depending on the environment of use of the motor, the life of the grease in the bearing may become the shortest among all the components configuring the motor, and when the bearing having grease enclosed therein is adopted, the motor must be disassembled to frequently replace the bearing, deteriorating maintenance performance, so that a grease exchange type motor configured to enable new grease to be supplied and old grease to be discharged before the grease reaches its life is produced as an industrial motor.

However, such grease exchange type motor is not introduced as the motor for hybrid automobiles and other automobiles. One of the considerable reasons for this is that the motor is installed at a position that cannot be easily accessed by human hand, such as under or inside the car body, and access to the grease supply port or discharge port provided on the motor is difficult, so that it has bad maintenance performance. However, there are vehicles that cannot introduce oil lubrication, so that such vehicles require a motor having a grease exchange type structure and equipped with a resolver, but the grease exchange type structure is complex and has a large size, and the size of the motor will be even more increased by disposing a resolver near the bearing.

### [Citation List]

### [Patent Literature]

[PTL 1] Japanese Patent Application Laid-Open Publication No. 2001-78393

US 2010/097053 A1 discloses a motor with a rotation sensor unit comprising a non-magnetic ring-shaped member to reduce leakage of magnetic flux.

US 2004/090132 A1 discloses an electric rotating machine comprising a resolver, which employs a shaft member made of a non-magnetic material to interrupt magnetic flux.

### [Summary of Invention]

### [Technical Problem]

A portion of the magnetic flux generated from the motor forms a magnetic circuit passing a motor housing and a bracket as leaked magnetic flux. Therefore, a motor equipped with a resolver has a drawback in that the resolver is easily influenced by the strong magnetic field generated from the motor. In other words, by mounting the resolver near the bearing, the leaked magnetic flux of the motor is passed through the resolver stator, exerting a bad influence on the weak magnetic flux generated from an exciting coil of the resolver, resulting in a noise of the output signal, that may lead to drawbacks such as erroneous detection of rotation position and erroneous detection of rotation speed, and may cause instable speed control of the motor, or in the worst case, prevent rotation. Conventionally, in order to prevent influence of leaked magnetic flux, it was possible to prevent the above problems from occurring by disposing the resolver at a separated position from the bracket to prevent leaked magnetic flux from passing therethrough, but such design caused the increase of the overall size of the motor.

Another considerable method for coping with this problem is to form the bracket using nonmagnetic material, such as aluminum, to cut off the leaked magnetic flux, but since aluminum has a weaker strength compared to iron, the thickness of the material must be increased to achieve the same level of strength, so that the size is increased to ensure strength. Moreover, since thermal expansion coefficient differs between iron and aluminum, a great difference in temperature causes significant size variation between materials, which becomes a problem. Austenitic stainless steel is a non-magnetic body having high strength, but the cost of the material is high compared to cast iron, so that the use for the bracket is out of the question. In addition, a method can be considered to cover the whole resolver for magnetic shielding to prevent the influence of outer magnetic flux, but in any case, the size or the cost of the motor is increased. During development of the present invention, it has been found that even when the whole resolver is covered with nonmagnetic material to prevent reception of bad influence from the leaked magnetic flux generated from the motor, the destination of the leaked magnetic flux will be lost, so that it will not be a fundamental method for solving the problem.

The present invention provides a grease exchange type motor with a resolver having a resolver disposed as a rotation detector, wherein even when the motor body is composed of a magnetic material through which leaked magnetic flux can pass, the rotation position and speed can be detected accurately without being influenced by the leaked magnetic flux of the motor, and the motor size is prevented from being increased.

### [Solution to Problem]

The present invention is defined by the appended claims.

### [Advantageous Effects of Invention]

According to the present invention, by shielding the magnetic flux leaking from the motor body by a support member of the resolver composed of a nonmagnetic material and providing a magnetic bypass formed of a magnetic material for bypassing the leaked magnetic flux from the motor, it becomes possible to further reduce the effect of the leaked magnetic flux received by the resolver. Moreover, the whole body of the motor can be downsized by suppressing increase of the number of components, even though the motor is grease exchange type and equipped with a resolver.

Further, the base plate which is a support member of the resolver only fixes the resolver stator, so that there is no need to consider a specific mechanical strength, and a most inexpensive material among nonmagnetic materials can be selected, while the main structure body of the motor required to have high mechanical strength can be formed of cast iron or steel plate having high mechanical strength, so that the optimum materials can be selected regardless of whether the material is magnetic or nonmagnetic.

### [Brief Description of Drawings]

[Fig. 1] Fig. 1 is a cross-sectional view of a peripheral area of a resolver of a motor showing a preferred embodiment of the present invention.
[Fig. 2] Fig. 2 is an exploded view of components illustrating the preferred embodiment of the present invention.

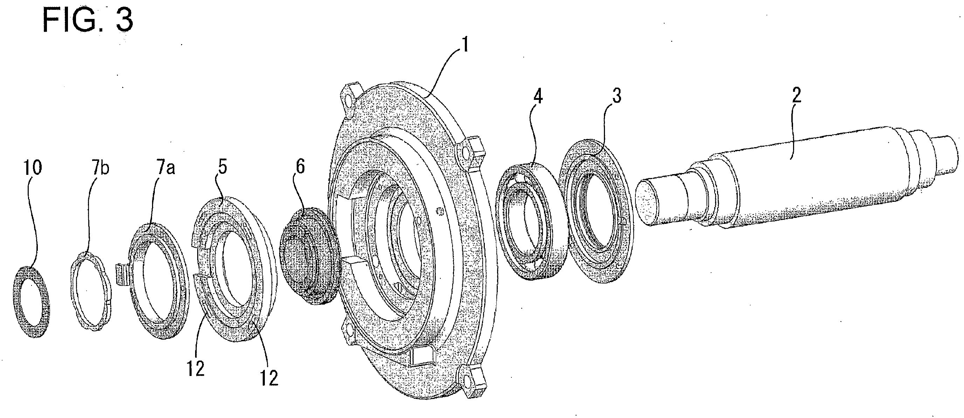

[Fig. 3] Fig. 3 is a view showing a resolver base plate according to a preferred embodiment of the present invention.
[Fig. 4] Fig. 4 is a cross-sectional view of a peripheral area of the resolver of the motor according to another embodiment of the present invention.

### [Description of Embodiments]

### <Embodiment 1>

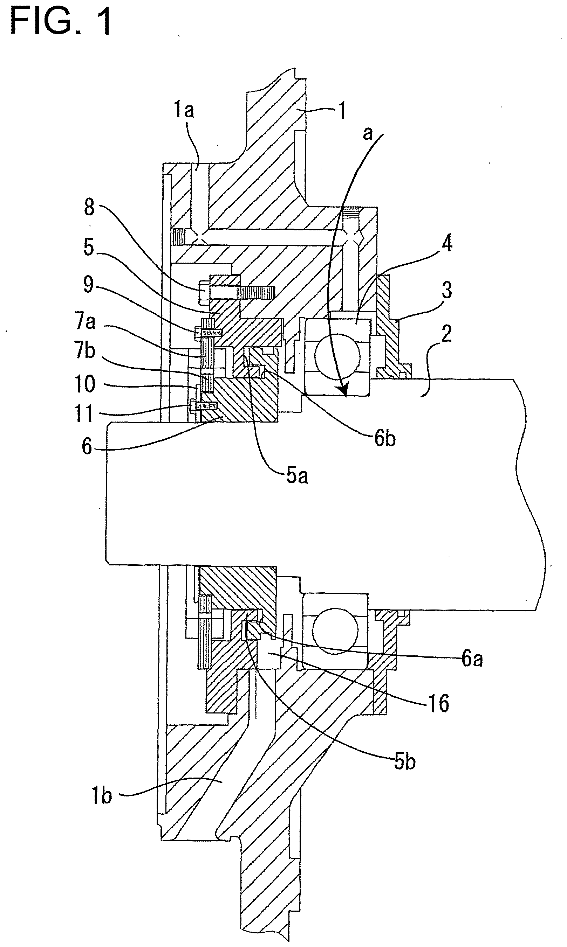

Fig. 1 illustrates an example of a configuration diagram showing a portion of a grease exchange type motor according to the present embodiment.

A stator and a rotor of a motor not shown are disposed on a right side of a rotary shaft 2.

The stator is supported by a frame not shown, and an end bracket 1 is fixed to the frame. A bearing 4 is fixed to the end bracket 1 so as to enable rotation of the rotary shaft 2, on an outer side of the end bracket 1 is fixed a nonmagnetic resolver base plate 5 via a fixing bolt 8, and on the further outer side thereof is fixed a resolver stator 7a via a fixing bolt 9. A nonmagnetic resolver rotor adapter 6 is fixed to the rotary shaft 2 on a left side of the bearing 4, and on the resolver rotor adapter 6 is fixed the resolver rotor 7b using a retainer member 10 and a fixing bolt 11.

The end bracket 1 is equipped with a supply port 1a for supplying grease to the bearing 4, and a grease discharge port 1b, and the resolver base plate 5 has a cutout 16 for guiding the grease to the discharge port 1b of the end bracket 1, so that when grease is supplied through the supply port 1a, the grease pushes out the old grease inside the bearing 4, and the old grease is passed through the cutout 16 of the resolver base plate 5 and discharged through the grease discharge port 1b. At this time, grease is pushed toward the resolver, but since the resolver base plate 5 and the resolver rotor adapter 6 are assembled in a labyrinth structure, the grease is prevented from leaking toward the resolver side by the labyrinth effect.

According to a more detailed description of the structure for preventing grease from leaking out toward the resolver side, as shown in Fig. 1, recessed grooves 5a and 6a are respective formed to the resolver base plate 5 and the resolver rotor adapter 6, wherein a ring projection 6b formed on a periphery of the resolver rotor adapter 6 is fit to the recessed groove 5a of the resolver base plate 5 maintaining a slight clearance therebetween, and further, a ring projection 5b formed on a periphery of the resolver base plate 5 is fit to the recessed groove 6a of the resolver rotor adapter 6 maintaining a slight clearance therebetween. The gap between the resolver base plate 5 and the resolver rotor adapter 6 constitutes the labyrinth structure.

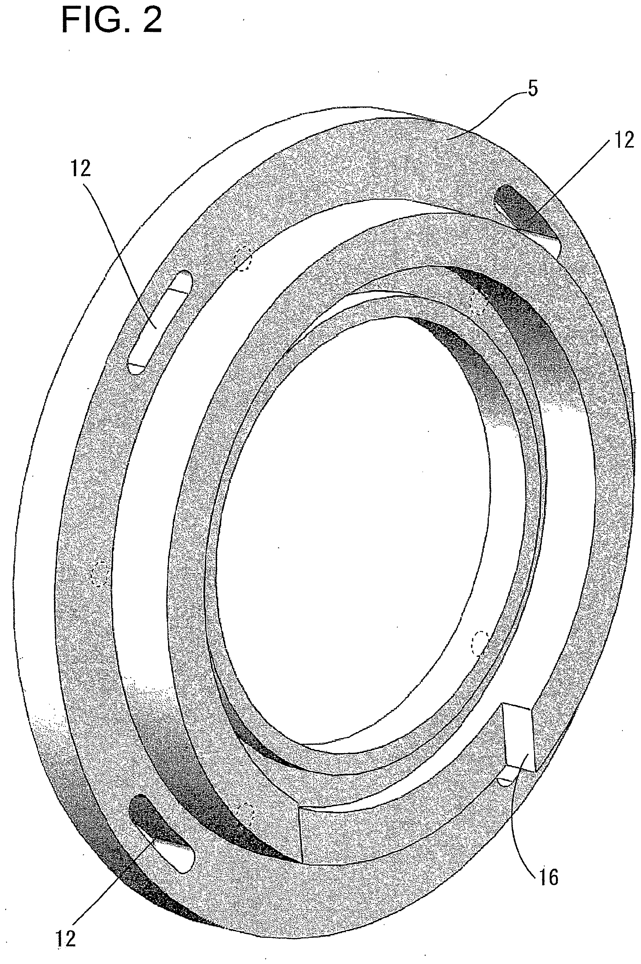

Further, as shown in Fig. 2, a slot 12 through which the fixing bolt 9 for fixing to the end bracket 1 is passed is formed on the resolver base plate 5. Thereby, when the resolver stator 7a is fixed to the end bracket 1 via the resolver base plate 5, the resolver stator 7a can be moved in the circumferential direction, and the position of magnetic pole of the motor and the phase of the resolver stator 7a can be adjusted.

When the motor rotates, a magnetic flux occurs from the stator and the rotor, and a portion of the magnetic flux attempts to flow toward the resolver rotor 7b through the rotary shaft 2 and toward the resolver stator 7a through the frame (not shown) and the end bracket 1, but such leaked magnetic flux is blocked by the resolver rotor adapter 6 and the resolver base plate 5 formed of nonmagnetic material, so that the leaked magnetic flux of the motor entering the resolver can either be reduced or eliminated. Actually, the leaked magnetic flux of the motor entering the resolver was 0.188 Tesla before taking measures against leaked magnetic flux, but based on test results, after taking measures by forming the resolver rotor adapter 6 and the resolver base plate 5 using nonmagnetic material, the leaked magnetic flux of the motor entering the resolver was suppressed to 0.1 Tesla or lower.

Further, it has become clear based on test results that leaked magnetic flux can be reduced effectively by having the resolver rotor adapter 6 and the resolver base plate 5 formed of nonmagnetic material arranged to be intervened between the resolver stator 7a and the resolver rotor 7b and the motor, instead of completely covering the circumference of the resolver stator 7a and the resolver rotor 7b constituting the resolver via a nonmagnetic material. In other words, by arranging the bearing 4 formed of magnetic material between the resolver rotor adapter 6d and the resolver base plate 5 formed of nonmagnetic material and the motor, as shown in Fig. 1, a portion of the magnetic flux from the stator and the rotor of the motor flows to the end bracket 1 and the bearing 4, forming a magnetic bypass A for bypassing the leaked magnetic flux from the motor. As described, by forming a magnetic bypass a formed of magnetic material between the motor and the resolver stator 7a and the resolver rotor 7b, the effect of reducing the leaked magnetic flux can be enhanced.

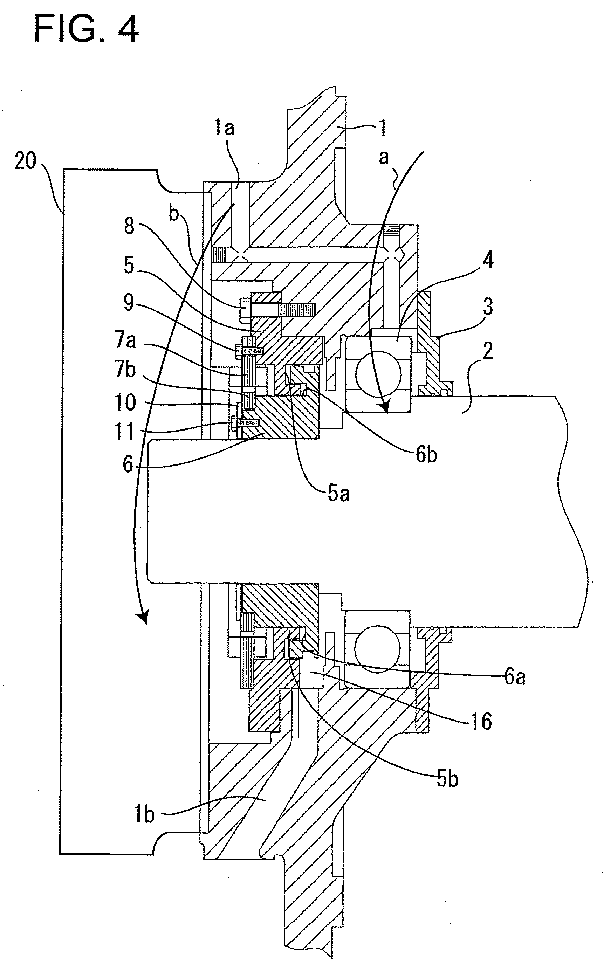

Fig. 1 illustrates an example where the magnetic bypass a for bypassing the leaked magnetic flux from the motor is formed by the resolver rotor adapter 6 made of nonmagnetic material and the bearing 4 arranged on the motor side of the resolver base plate 5, but as shown in Fig. 4, it is possible to form a mounting seat 20 of a driven device such as a pump driven by the motor made of a magnetic material, and forming a magnetic bypass b by this mounting seat 20. In other words, according to this example, a mounting seat 20 formed of a magnetic material is fixed to an outer side of the end bracket 1 positioned on the side opposite from the motor, and the side on which the magnetic bypass b is formed is not restricted to the motor side but can also be formed on the side opposite from the motor to enhance the effect of reducing the leaked magnetic flux. Moreover, the magnetic bypass can be formed both on the motor side and on the side opposite therefrom.

### [Reference Signs List]

1 End bracket
2 Shaft
3 Bearing cover
4 Bearing
5 Resolver base plate
6 Resolver rotor adapter
7a Resolver stator
7b Resolver rotor
8 Base plate fixing bolt
9 Resolver stator fixing bolt
10 Resolver rotor retainer plate
11 Fixing bolt for resolver rotor retainer plate
1a Grease supply port
1b Grease discharge port

## Claims

1. A motor with resolver configured to axially support a rotary shaft (2) of the motor by an end bracket (1), the end bracket having a resolver stator (7a) supported by a resolver base plate (5) and a resolver rotor (7b) supported by a resolver rotor adapter (6), wherein
a material of the end bracket (1) axially supporting the rotary shaft (2) is composed of a magnetic material, and a material of the resolver base plate (5) and the resolver rotor adapter (6) supporting the resolver is composed of a nonmagnetic material, so that a magnetic bypass formed of the magnetic material for bypassing a leaked magnetic flux from the motor is provided,
the resolver base plate (5) and the resolver rotor adapter (6) formed of a nonmagnetic material are arranged on a motor side so as to block the leaked magnetic flux from the motor with respect to the resolver,
the end bracket (1) is equipped with a bearing (4) formed of a magnetic material for axially supporting the rotary shaft (2), the bearing (4) being arranged on the motor side than the resolver base plate (5) and the resolver rotor adapter (6), and the bearing (4) configuring the magnetic bypass on the motor side, and wherein
the leaked magnetic flux from the motor flows through the end bracket (1) and through the bearing (4).

2. The motor with resolver according to Claim 1, wherein
a mounting seat of a driven device being driven by the motor is composed of a magnetic material, the mounting seat being disposed on an outer side than the end bracket (1) with respect to the resolver base plate (5) and the resolver rotor adapter (6), and the mounting seat configuring the magnetic bypass.

3. The motor with resolver according to Claim 1, wherein
a magnetic bypass composed of a magnetic material for bypassing the leaked magnetic flux from the motor is provided, so that the leaked magnetic flux received by the resolver is 0.1 Tesla or smaller.

4. The motor with resolver according to Claim 1, wherein
a bolt hole for fixing the resolver base plate (5) to the end bracket (1) in a manner capable of matching and adjusting a magnetic pole position of the motor and a phase of the resolver is formed as a slot to enable movement in a circumferential direction, and configured rotatably for allowing angle adjustment.

5. A grease exchange type motor with resolver according to claim 1, which includes a grease exchange type of bearing lubrication system; wherein
the resolver base plate (5) fixing the resolver stator (7a) forms a labyrinth structure by mutual assembly with the resolver rotor adapter (6), thereby preventing grease from leaking to an exterior.

6. The grease exchange type motor with resolver according to Claim 5, wherein
a cutout is provided to the resolver base plate (5) for guiding discharged grease to a discharge port of the end bracket (1).

## Patentansprüche

1. Motor mit Resolver, der dazu konfiguriert ist, eine Rotorwelle (2) des Motors durch einen Endträger (1) axial zu stützen, wobei der Endträger einen durch eine Resolver-Basisplatte (5) gestützten Resolverstator (7a) und einen durch einen Resolverrotoradapter (6) gestützten Resolverrotor (7b) aufweist, wobei
ein Material des die Rotorwelle (2) axial stützenden Endträgers (1) aus einem Magnetmaterial gebildet ist, und ein Material der Resolverbasisplatte (5) und des den Resolver stützenden Resolverrotoradapters (6) aus einem nicht-magnetischen Material gebildet ist, so dass ein magnetischer Bypass des Magnetmaterials entsteht, um einen aus dem Motor austretenden Magnetfluss zu überbrücken,
die Resolverbasisplatte (5) und der Resolverrotoradapter (6), die aus einem nicht-magnetischen Material gebildet sind, auf einer Motorseite angeordnet sind, so dass sie den aus dem Motor austretenden Magnetfluss bezüglich des Resolvers blockieren,
der Endträger (1) mit einem Lager aus Magnetmaterial zum axialen Stützen der Rotorwelle (2) ausgerüstet ist, wobei das Lager (4) näher an der Motorseite angeordnet ist als die Resolverbasisplatte (5) und der Resolverrotoradapter (6), und das Lager (4) den magnetischen Bypass auf der Motorseite konfiguriert, und wobei
der aus dem Motor austretende Magnetfluss durch die Endträger (1) und durch das Lager (4) verläuft.

2. Motor mit Resolver nach Anspruch 1, wobei
ein Befestigungssitz einer durch den Motor angetriebenen Antriebsvorrichtung aus einem Magnetmaterial gebildet ist, wobei der Befestigungssitz auf einer weiter außen als die Endträger (1) bezüglich der Resolverbasisplatte (5) und dem Resolverrotoradapter (6) liegenden Seite angeordnet ist, und der Befestigungssitz den magnetischen Bypass konfiguriert.

3. Motor mit Resolver nach Anspruch 1, wobei
ein aus einem Magnetmaterial gebildeter magnetischer Bypass zum Überbrücken des aus dem Motor austretenden Magnetfluss es vorgesehen ist, so dass der durch den Resolver empfangene austretende Magnetfluss höchstens 0,1 Tesla beträgt.

4. Motor mit Resolver nach Anspruch 1, wobei
ein Bolzenloch zum Fixieren der Resolverbasisplatte (5) an dem Endträger (1) in einer Weise, die das Abstimmen und Anpassen einer Magnetpolposition des Motors und einer Phase des Resolvers erlaubt, als ein Schlitz ausgebildet ist, um eine Bewegung in eine Umfangsrichtung zu erlauben, und drehbar konfiguriert ist, um eine Winkelanpassung zu erlauben.

5. Schmierstoffaustausch-Motor mit Resolver nach Anspruch 1, der ein Lagerschmiersystem vom Schmierstoffaustauschtyp aufweist, wobei
die den Resolverstator (7a) fixierende Resolverbasisplatte (5) eine Labyrinthstruktur durch wechselseitigen Zusammenbau mit dem Resolverrotoradapter (6) bildet und dadurch ein Austreten von Schmierstoff nach außen verhindert.

6. Schmierstoffaustausch-Motor mit Resolver nach Anspruch 5, wobei
eine Aussparung in der Resolverbasisplatte (5) vorgesehen ist, um abgeführten Schmierstoff zu einer Abführöffnung des Endträgers (1) zu führen.

## Revendications

1. Moteur ayant un résolveur configuré pour supporter axialement un arbre rotatif (2) du moteur par un collier d'extrémité (1), le collier d'extrémité ayant un stator de résolveur (7a) supporté par une plaque de base de résolveur (5) et un rotor de résolveur (7b) supporté par un adaptateur de rotor de résolveur (6), dans lequel
un matériau du collier d'extrémité (1) supportant axialement l'arbre rotatif (2) est composé d'un matériau magnétique, et un matériau de la plaque de base de résolveur (5) et de l'adaptateur de rotor de résolveur (6) supportant le résolveur est composé d'un matériau non-magnétique, de sorte qu'une dérivation magnétique formée du matériau magnétique pour dévier un flux magnétique de fuite provenant du moteur est fournie,
la plaque de base de résolveur (5) et l'adaptateur de rotor de résolveur (6) formés d'un matériau non-magnétique sont agencés sur un côté moteur de manière à bloquer le flux magnétique de fuite provenant du moteur par rapport au résolveur,
le collier d'extrémité (1) est équipé d'un palier (4) formé d'un matériau magnétique pour supporter axialement l'arbre rotatif (2), le palier (4) étant agencé davantage sur le côté moteur que la plaque de base de résolveur (5) et l'adaptateur de rotor de résolveur (6), et le palier (4) configurant la dérivation magnétique sur le côté moteur, et dans lequel
le flux magnétique de fuite provenant du moteur circule à travers le collier d'extrémité (1) et à travers le palier (4).

2. Moteur ayant un résolveur selon la revendication 1, dans lequel
un siège de montage d'un dispositif entraîné qui est entraîné par le moteur est composé d'un matériau magnétique, le siège de montage étant disposé davantage sur un côté extérieur que le collier d'extrémité (1) par rapport à la plaque de base de résolveur (5) et l'adaptateur de rotor de résolveur (6), et le siège de montage configurant la dérivation magnétique.

3. Moteur ayant un résolveur selon la revendication 1, dans lequel
une dérivation magnétique composée d'un matériau magnétique pour dévier le flux magnétique de fuite provenant du moteur est fournie, de sorte que le flux magnétique de fuite reçu par le résolveur est de 0,1 Tesla ou moins.

4. Moteur ayant un résolveur selon la revendication 1, dans lequel
un trou de boulon pour fixer la plaque de base de résolveur (5) au collier d'extrémité (1) de manière à pouvoir faire correspondre et ajuster une position de pôle magnétique du moteur et une phase du résolveur est formé sous forme d'une fente pour permettre un mouvement dans une direction circonférentielle, et configuré de manière rotative pour permettre un ajustement angulaire.

5. Moteur de type à échange de graisse ayant un résolveur selon la revendication 1, qui comprend un type à échange de graisse de système de lubrification de paliers ; dans lequel
la plaque de base de résolveur (5) fixant le stator de résolveur (7a) forme une structure de labyrinthe par assemblage mutuel avec l'adaptateur de rotor de résolveur (6), empêchant ainsi la graisse de fuir vers un extérieur.

6. Moteur de type à échange de graisse ayant un résolveur selon la revendication 5, dans lequel
une découpe est formée dans la plaque de base de résolveur (5) pour guider de la graisse déchargée vers un orifice de décharge du collier d'extrémité (1).
